(19) Europäisches Patentamt
European Patent Office
Office européen des brevets

(11) EP 4 349 886 A1

(12) # EUROPEAN PATENT APPLICATION
published in accordance with Art. 153(4) EPC

(43) Date of publication:
**10.04.2024 Bulletin 2024/15**

(21) Application number: **22811273.6**

(22) Date of filing: **23.05.2022**

(51) International Patent Classification (IPC):
***C08J 3/12*** (2006.01) ***C08J 3/16*** (2006.01)
***C08K 7/04*** (2006.01) ***C08L 81/04*** (2006.01)
***C08J 5/04*** (2006.01) ***B33Y 10/00*** (2015.01)
***B29C 64/153*** (2017.01) ***B29C 64/314*** (2017.01)
***B29C 64/321*** (2017.01) ***C08K 3/36*** (2006.01)
***B33Y 70/00*** (2020.01) ***B33Y 70/10*** (2020.01)

(52) Cooperative Patent Classification (CPC):
**B29C 64/153; B29C 64/314; B29C 64/321; B33Y 10/00; B33Y 70/00; B33Y 70/10; C08J 3/12; C08J 3/16; C08J 5/04; C08K 3/36; C08K 7/04; C08L 81/04**

(86) International application number:
**PCT/JP2022/021062**

(87) International publication number:
**WO 2022/250003 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.05.2021 JP 2021089043**

(71) Applicant: **Toray Industries, Inc.**
**Tokyo 103-8666 (JP)**

(72) Inventors:
- **KAWAI Azusa**
  **Nagoya-shi, Aichi 455-8502 (JP)**
- **WATANABE Kei**
  **Nagoya-shi, Aichi 455-8502 (JP)**
- **OKAMOTO Naoyo**
  **Nagoya-shi, Aichi 455-8502 (JP)**

(74) Representative: **Mewburn Ellis LLP**
**Aurora Building**
**Counterslip**
**Bristol BS1 6BX (GB)**

(54) **RESIN POWDER MIXTURE, METHOD FOR PRODUCING SAME, AND METHOD FOR PRODUCING THREE-DIMENSIONAL MOLDED PRODUCT**

(57) Provided are: a resin powder mixture which contains a polyarylene sulfide resin powder having a gas generation amount of 0.25 wt% or less, a melt flow rate of 5-75 g/10 min and an average particle diameter of 1-100 μm; a method for producing same; and a method for producing a three-dimensional model object using the resin powder mixture. By using the resin powder mixture of the present invention, it is possible to obtain a three-dimensional model object which has few voids and exhibits excellent tensile strength.

EP 4 349 886 A1

## Description

### Technical Field of the Invention

The present invention relates to a method for producing a three-dimensional model object suitable for a wide range of applications such as automotive, aerospace, industrial, and medical applications, and further, to a resin powder mixture suitable for use as a material thereof, and a method for producing the same.

### Background Art of the Invention

Three-dimensional modeling is widely developed in automotive, aerospace, industrial, medical, and other applications because it enables design with a high degree of freedom of shape. As the modeling method, the powder bed fusion method is suitable in terms of its ability to realize precision modeling and mechanical strength, and in that it does not require support members. In the modeling process of the powder bed fusion method, a thin-layer forming process in which the resin powder is developed into a thin layer, and a cross-sectional shape forming process in which the formed thin layer is irradiated with a laser beam in a shape corresponding to the cross-sectional shape of the object to be modeled to join the powder, are repeated sequentially to produce the model object.

Although polyamide 12 resin has been mainly used as a raw material for the above-described resin powder, in recent years, the demand for strength and heat resistance has been increasing, and it is desired to apply high-functional raw materials such as polyarylene sulfide resins represented by polyphenylene sulfide resin (hereinafter, also referred to as PPS resin), which has excellent mechanical properties and heat resistance, etc.

For example, Patent document 1 discloses a technology for reducing shrinkage due to crystallization and suppressing warpage of a three-dimensional model object (hereinafter, also referred to as a model object) by using a polyarylene sulfide resin with an appropriate recrystallization temperature for the powder bed fusion method. Patent document 2 discloses a technology to improve the mechanical strength of a model object without impairing the powder flowability during modeling, by adding inorganic particles and inorganic reinforcing material to a polyarylene sulfide resin.

### Prior art documents

Patent documents

Patent document 1: Japanese Patent No. 6256818
Patent document 2: JP-A-2017-043654

### Summary of the Invention

### Problems to be solved by the Invention

However, in Patent documents 1 and 2, there was a problem that the tensile strength of a model object was low as compared with a case of injection molding.

Accordingly, in view of the problems of the conventional technologies, an object of the present invention is to provide a method for producing a three-dimensional model object with fewer voids in the model object and superior tensile strength, as well as a resin powder mixture suitably used as a material thereof, and a method for producing the same.

### Means for solving the Problems

The present invention has been developed as a result of diligent study to solve such problems, leading to the following invention. Namely, the present invention is as follows.

(1) A resin powder mixture containing a polyarylene sulfide resin powder [A] satisfying the following (a1) to (a3).

(a1) Gas generation amount is 0.25wt% or less.
(a2) Melt flow rate is 5 g/10 min or more and 75 g/10 min or less.
(a3) Average particle diameter is 1 μm or more and 100 μm or less.

(2) The resin powder mixture according to (1), wherein the polyarylene sulfide resin powder [A] is contained at an amount of 20 parts by weight or more and 100 parts by weight or less, taking the total amount of resin powder as 100 parts by weight.
(3) The resin powder mixture according to (1) or (2), containing the polyarylene sulfide resin powder [A] and a polyarylene sulfide resin powder [B] satisfying the following (b1) to (b3).

(b1) Gas generation amount is more than 0.25 wt% and 0.40 wt% or less.
(b2) Melt flow rate is more than 75 g/10 min and 125 g/10 min or less.
(b3) Average particle diameter is 1 μm or more and 100 μm or less.

(4) The resin powder mixture according to (3), wherein the polyarylene sulfide resin powder [B] is contained at an amount of 1 part by weight or more and 50 parts by weight or less, taking the total amount of resin powder as 100 parts by weight.
(5) The resin powder mixture according to any of (1) to (4), containing at least one inorganic reinforcing material selected from carbon fibers, glass fibers and glass beads.
(6) The resin powder mixture according to (5), wherein the inorganic reinforcing is contained at a weight of 5 wt% or more and 40 wt% or less, taking the total weight of resin powder mixture as 100 wt%.
(7) The resin powder mixture according to (5) or (6), wherein the maximum dimension of the inorganic reinforcing material is 1 μm or more and 400 μm or less.
(8) The resin powder mixture according to any of (5) to (7), wherein the inorganic reinforcing material is a carbon fiber having a specific volume resistivity of $20 \times 10^{-4}$ Ω·cm or less.
(9) The resin powder mixture according to any of (1) to (8), containing inorganic particles having an average particle diameter of 20 nm or more and 500 nm or less.
(10) The resin powder mixture according to (9), wherein the inorganic particles are contained at a weight of 0.1 wt% or more and 0.5 wt% or less, taking the total weight of resin powder mixture as 100 wt%.
(11) The resin powder mixture according to (9) or (10), wherein the inorganic particles are spherical silica fine particles.
(12) A method for producing a resin powder mixture according to any of (1) to (11), characterized in that the polyarylene sulfide resin powder [A] and other components constituting the resin powder mixture are enclosed in a vessel having a plurality of rotation axes which includes at least a first rotation axis for rotating the vessel and a second rotation axis for rotating the vessel together with the first rotation axis in a direction different from a direction of the rotation by the first rotation axis, and mixed by rotating the plurality of rotation axes simultaneously.
(13) The method for producing a resin powder mixture according to (12), wherein mixing is performed while resolving agglomeration of the components constituting the resin powder mixture by a rotational blade provided in the vessel.
(14) A method for producing a three-dimensional model object, characterized in that the resin powder mixture according to any of (1) to (11) is supplied to a 3D printer.
(15) The method for producing a three-dimensional model object according to (14), wherein the 3D printer is a 3D printer for powder bed fusion method.

## Effect according to the Invention

According to the present invention, a resin powder mixture with a low gas generation amount, and a model object with few voids and excellent tensile strength when made into a three-dimensional model object using the resin powder mixture, can be obtained.

## Brief explanation of the drawings

[Fig. 1] Fig. 1 is a schematic perspective view of a mixer with two rotation axes, which is an example of a mixer used in the present invention.
[Fig. 2] Fig. 2 is a schematic perspective view of a mixer with two rotation axes, which is another example of a mixer used in the present invention.

## Embodiments for carrying out the Invention

Hereinafter, the present invention will be explained in detail together with embodiments.
The resin powder mixture according to the present invention is a resin powder mixture containing a polyarylene sulfide resin powder [A] that satisfies the following conditions (a1) to (a3).

(a1) Gas generation amount is 0.25wt% or less.
(a2) Melt flow rate is 5 g/10 min or more and 75 g/10 min or less.
(a3) Average particle diameter is 1 μm or more and 100 μm or less.

As a means for improving the strength and heat resistance of a model object, it is known to use polyarylene sulfide resin or the like as the raw material as described above. However, in general, in case where a resin powder comprising a resin with a high heat resistance is used as a raw material for a model object, because a process of melting the resin powder by strong laser beam irradiation is included, voids caused by gases generated from low-boiling-point oligomers in the resin are created in the model object, which cause a decrease in tensile strength. For this problem, we have focused on the resin structure and molding mechanism, and have come up with the idea that forming micro cross-linking in the resin could suppress gas generation during laser irradiation and improve the tensile strength of the model object. On the other hand, the formation of cross-linking in the resin also causes an increase of viscosity, which reduces moldability on the contrary.

Accordingly, the inventors of the present invention have found that by using a resin powder mixture containing polyarylene sulfide resin powder [A] with gas generation amount, melt flow rate, and average particle diameter in respective specific ranges, the above-described trade-off can be solved and the tensile strength of the model object can be improved, thereby reaching the present invention.

Hereinafter, respective components forming the resin powder mixture will be explained.

The resin powder mixture of the present invention must contain polyarylene sulfide resin powder [A]. [A] is a polyarylene sulfide resin powder that satisfies all of the following conditions (a1) to (a3).

(a1) Gas generation amount is 0.25wt% or less.
(a2) Melt flow rate is 5 g/10 min or more and 75 g/10 min or less.
(a3) Average particle diameter is 1 μm or more and 100 μm or less.

By compounding such [A] in the resin powder mixture, it is possible to obtain a void-less model object with a good quality and to exhibit a high tensile strength.

As the condition (a1) of the polyarylene sulfide resin powder [A] in the present invention, the gas generation amount of [A] should be 0.25 wt% or less. Within this range, gas generation of the molten resin can be suppressed, voids in the model object can be reduced, and as a result, the tensile strength of the model object can be enhanced. Where, it is preferred that the gas generation amount is 0.2 wt% or less, because a void-less model object hardly causing defects can be obtained. Further, there is no lower limit in the gas generation amount, but the lower limit of detection limit is usually 0.05 wt%.

The term "gas generation amount" used herein refers to a weight reduction rate of the polyarylene sulfide resin constituting the polyarylene sulfide resin powder [A] due to heating. Concretely, when 10g of [A] is placed in an aluminum cup weighing dish (5-361-01supplied by AS ONE Co., Ltd.) and placed in an oven preheated to 320°C (FO810 supplied by Yamato Scientific Co., Ltd., under atmospheric atmosphere) for 2 hours, a part of the polyarylene sulfide resin constituting the polyarylene sulfide resin powder [A] is thermally decomposed, and the weight of the resin is reduced due to volatilization of the oligomer components, and the gas generation amount indicates a rate of such a weight reduction. Such a gas generation amount is calculated by dividing the weight difference of [A] before and after heating by the weight of [A] before heating and multiplying by 100.

As the condition (a2) of the polyarylene sulfide resin powder [A] in the present invention, the melt flow rate of [A] must be 5 g/10 min or more and 75 g/10 min or less. Within such a range, the molten resin after laser beam irradiation penetrates to the lower layers, the adhesion between the layers increases, and the tensile strength of the model object can be maintained.

Here, the melt flow rate of [A] is a value measured with polyarylene sulfide resin powder [A] under conditions of a temperature of 315.5°C and a load of 5 kg by a method according to ASTM-D1238-70.

As the condition (a3) of the polyarylene sulfide resin powder [A] in the present invention, the average particle diameter of [A] must be 1 μm or more and 100 μm or less. If it is less than 1 μm agglomeration of [A] occurs due to static electricity, and similarly the uniformity is impaired during powder lamination and the tensile strength of the three-dimensional model object is lowered. If it exceeds 100 μm, the uniformity is impaired during powder lamination and the tensile strength of the three-dimensional model object is lowered. The lower limit of the average particle diameter is preferably 3 μm, more preferably 8 μm and most preferably 15 μm. Further, the upper limit of the average particle diameter is preferably 95 μm, more preferably 85 μm and most preferably 70 μm.

Here, the average particle diameter of [A] is determined as a particle size (d50) at which the cumulative frequency from the small particle diameter side of the particle diameter distribution measured by a laser diffraction particle size distribution meter based on Mie's scattering/diffraction theory becomes 50%.

The polyarylene sulfide resin powder [A] in the present invention is preferably one heat-treated from the viewpoint

of capable of removing low-boiling oligomers, which become components of generated gas.

As the method of the heat treatment, exemplified are heating in a nitrogen atmosphere and heating with addition of a cross-linking agent such as a peroxide, but heating in a nitrogen atmosphere is preferred. Further, in order to efficiently remove the generated gas, it is preferred to heat while being stirred or at a state where the powder is thinly spread.

The lower limit of the heat treatment temperature is preferably 150°C or higher, more preferably 200°C or higher, and further preferably 250°C or higher. If the heat treatment temperature is lower than 150°C, the low boiling point oligomers cannot be removed efficiently. The upper limit of the heat treatment temperature is preferably lower than the melting point of the polyarylene sulfide resin constituting [A], more preferably at least 5°C lower than the melting point, and further preferably at least 10°C lower than the melting point. If it exceeds the melting point, the powder around the model object will melt during modeling, and the average particle diameter and uniformity will change, and there is a possibility that the flowability of the powder may be significantly impaired. The heat treatment time is preferably 1 hour or more and 24 hours or less, more preferably 2 hours or more and 10 hours or less, in order to sufficiently remove the oligomers.

The content of the polyarylene sulfide resin powder [A] in the present invention preferably contains 20 parts by weight or more and 100 parts by weight or less of the above-described [A], taking the total amount of the resin powder as 100 parts by weight. Further in order to improve the tensile strength, it is more preferably 40 parts by weight or more and 100 parts by weight or less, and most preferably 70 parts by weight or more and 100 parts by weight or less.

In particular, the polyarylene sulfide resin powder [A] is preferably a recycled resin powder because the low boiling point oligomers can be efficiently removed. Recycled resin powder means resin powder which is not used for modeling and is recovered from resin powder that has been supplied to a 3D printer and heated in the device. Such recycled resin powder, for example, can be obtained by recovering the resin powder which has not been used in modeling, when the modeling has been performed using a powder bed fusion method 3D printer (Rafael 300HT supplied by Aspect, Inc.), in a nitrogen atmosphere at 250 to 275°C, for a modeling time of 1 to 20 hours.

In the present invention, it is preferred that polyarylene sulfide resin powder [B] is contained as a resin powder other than polyarylene sulfide resin powder [A]. [B] is a polyarylene sulfide resin powder satisfying all of the following conditions (b1) to (b3).

(b1) Gas generation amount is more than 0.25 wt% and 0.40 wt% or less.
(b2) Melt flow rate is more than 75 g/10 min and 125 g/10 min or less.
(b3 ) Average particle diameter is 1 μm or more and 100 μm or less.

As the condition (b1) of the polyarylene sulfide resin powder [B] in the present invention, it is preferred that the gas generation amount of [B] is more than 0.25 wt% and 0.40 wt% or less in order to maintain the tensile strength.

As the condition (b2) of the polyarylene sulfide resin powder [B] in the present invention, from the viewpoint of moldability, it is preferred that the melt flow rate of [B] is more than 75 g/10 min and 125 g/10 min or less.

As the condition (b3) of the polyarylene sulfide resin powder [B] in the present invention, it is preferred that the average particle diameter of [B] is 1 μm or more and 100 μm or less in order to improve uniformity during molding.

Here, the gas generation amount of [B], the melt flow rate of [B], and the average particle diameter of [B] are led by evaluation method and calculation method similar to those for [A].

The content of the polyarylene sulfide resin powder [B] in the present invention is preferably 1 part by weight or more and 50 parts by weight or less, taking the total amount of the resin powder as 100 parts by weight. Further, from the balance of the tensile strength and moldability of a model object, the content is more preferably 1 part by weight or more and 30 parts by weight or less, and most preferably 1 part by weight or more and 20 parts by weight or less. The smaller the ratio of [B], the smaller the ratio of the resin that generates a large amount of gas, which is effective from the viewpoint of reducing voids.

Each of the particle size distributions (degree of uniformity) of the polyarylene sulfide resin powders [A] and [B] of the present invention is preferably 4.0 or less because the degree of compaction becomes low when powder pressure is applied. The degree of uniformity is preferably 3.2 or less, more preferably 3.0 or less, further preferably 2.8 or less, particularly preferably 2.5 or less, and extremely preferably 2.0 or less. The lower limit of the degree of uniformity is theoretically 1.0, but practically it is preferably 1.1 or more, more preferably 1.2 or more, particularly preferably 1.3 or more, and extremely preferably 1.4 or more.

Here, the degree of uniformity is determined as a value calculated by dividing the particle size (d60), at which the cumulative frequency from the small particle diameter side of the particle diameter distribution measured by the aforementioned method (the particle diameter distribution measured by the laser diffraction particle size distribution meter based on Mie's scattering/diffraction theory) becomes 60%, by the particle size (d10) at which the cumulative frequency from the small particle diameter side becomes 10%.

The polyarylene sulfide resin constituting the polyarylene sulfide resin powder in the present invention is a

homopolymer or copolymer having a repeating unit of the formula -(Ar-S)- as a main structural unit. Ar is a group containing an aromatic ring in which a bond is present on the aromatic ring, and exemplified by divalent repeating units represented by the following formulas (A) to (K) and the like, and among these, a repeating unit represented by the formula (A) is particularly preferred.

[Chemical formula 1]

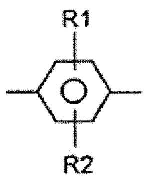
...(A)

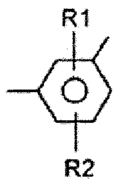
...(B)

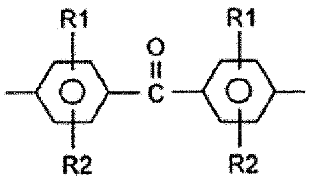
...(C)

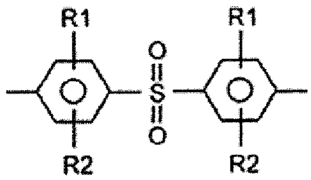
...(D)

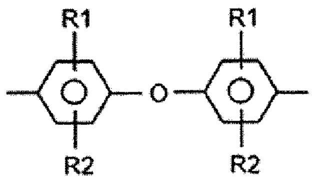
...(E)

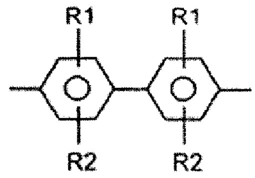
...(F)

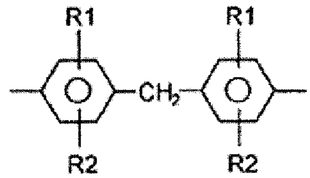
...(G)

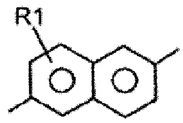
...(H)

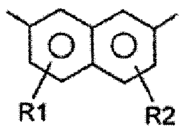
...(I)

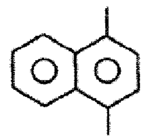
...(J)

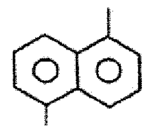
...(K)

Where, R1 and R2 in the formulas are substituents selected from hydrogen, an alkyl group having 1 to 6 carbon atoms, an alkoxy group having 1 to 6 carbon atoms and a halogen group, and R1 and R2 may be same or different from each other.

Further, the polyarylene sulfide resin in the present invention may be any of a random copolymer, a block copolymer, and a mixture thereof containing the above-described repeating unit. As representatives of these, exemplified are polyphenylene sulfide resins, polyphenylene sulfide sulfone resins, polyphenylene sulfide ketone resins, and random copolymers, block copolymers thereof and mixtures thereof. As particularly preferred polyarylene sulfide resins, exemplified are a polyphenylene sulfide resin, a polyphenylene sulfide sulfone resin and a polyphenylene sulfide ketone resin each containing 80 mol% or more, particularly 90 mol% or more of a p-phenylene sulfide unit as a main constituent unit of the polymer. Most preferable one is a polyphenylene sulfide resin.

The recrystallization temperature of the polyarylene sulfide resin powder used in the present invention is preferably 150°C or higher and 210°C or lower. If the recrystallization temperature of the polyarylene sulfide resin is lower than 150°C, the solidification after laser beam irradiation is significantly delayed, and a uniform powder surface cannot be formed when layering a powder layer on the upper part of the molten resin. Further, if the recrystallization temperature of the polyarylene sulfide resin exceeds 210° C, shrinkage and warping occur due to crystallization of the resin melted by laser beam irradiation. In the powder bed fusion method, if warping occurs in the molten resin, the warped molten resin is dragged when layering a powder layer on the upper part of the molten resin, and a three-dimensional model

object with a desired shape cannot be obtained. Here, the recrystallization temperature indicates an apex temperature of the exothermic peak during crystallization when the polyarylene sulfide resin is heated from 50°C to 340°C at a rate of 20 °C/min using a differential scanning calorimeter in a nitrogen atmosphere, held at 340°C for 5 minutes, and then the temperature is lowered from 340°C to 50°C at a rate of 20 °C/min. The lower limit of the recrystallization temperature is preferably 150°C, more preferably 153°C, further preferably 155°C, and particularly preferably 160°C. The upper limit of the recrystallization temperature is preferably 210°C, more preferably 205°C, further preferably 200°C, and particularly preferably 195°C.

An arbitrary resin powder other than [A] and [B] described above can be used for the resin powder of the present invention. For example, thermosetting resin particles composed of an epoxy resin, an acrylic resin, etc., polyarylene sulfide resin other than [A] and [B], and thermoplastic resin particles composed of a polyamide resin, a polybutyl terephthalate resin, a polypropylene resin, a polycarbonate resin, etc., can be exemplified. These resin powders may be used at a condition of only one type, and may be compounded in combination of a plurality of types.

In the resin powder mixture of the present invention, inorganic reinforcing material can be added in order to improve the tensile strength of the model object.

The size of the inorganic reinforcing material used in the present invention is not particularly limited, but one having a maximum dimension of 1 μm or more and 400 μm or less can be used. In order to more exhibit the tensile strength of the three-dimensional model object, the size is more preferably 20 μm or more, further preferably 50 μm or more. Further, from the viewpoint that the larger the size of the inorganic reinforcing material, the worse the flowability of the resin powder mixture, the size is more preferably 200 μm or less, and further preferably 170 μm or less. Here, the maximum dimension is determined as a number average value of the maximum length values measured by observing the inorganic reinforcing material using an electron microscope, and randomly selecting 100 inorganic reinforcing materials from the image magnified to 10,000 times or more and 100,000 times or less, and measuring the maximum distance between two points on the outer contour of each inorganic reinforcing material as its maximum length.

In case where the inorganic reinforcing material is fibrous, the fiber diameter is preferably 0.1 μm or more and 50 μm or less. The lower limit of the fiber diameter is more preferably 0.5 μm and particularly preferably 1 μm. Further, the upper limit of the fiber diameter is more preferably 40 μm, and particularly preferably 30 μm.

As the inorganic reinforcing material of the present invention, exemplified are talc, silicic acid-containing compounds, minerals, glass fibers, glass beads, glass flakes, foamed glass beads, single-crystal potassium titanate, carbon fibers, carbon nanotubes, carbon black, anthracite powder, titanium oxide, magnesium oxide, potassium titanate, mica, asbestos, calcium sulfite, calcium silicate, molybdenum sulfide, boron fibers, silicon carbide fibers, etc., and preferably, carbon fibers, glass fibers and glass beads. These inorganic reinforcing materials can be used alone or in combination of two or more.

With respect to the specific volume resistivity of carbon fibers used in the present invention, the lower it is, more preferable, because agglomeration of the fibers due to electrification is less likely to occur when mixed as a powder mixture. The specific volume resistivity is preferably $20 \times 10^{-4}$ Ω·cm or less. Here , the specific volume resistivity is a value determined by measuring the electric resistance value of the carbon fiber bundle cut out from the roving and calculating by the following equation.

$$\text{Specific volume resistivity} = \text{Resistance value } (\Omega) \times \text{Carbon fiber bundle width (mm)} \times \text{Carbon fiber bundle thickness (mm)} \times \text{Carbon fiber bundle length (mm)}$$

The content of the inorganic reinforcing material in the present invention is preferably 5% by weight or more and 40% by weight or less, taking the resin powder mixture as 100% by weight. Where, the resin powder mixture in the present application indicates a mixture of resin powders, inorganic reinforcing material, inorganic particles, and other components containing [A], [B] and components other than [A], [B], that is, a mixture mixing all raw materials. If the inorganic reinforcing material is 5% by weight or more, a higher reinforcing effect can be obtained for the model object, which is preferable, and 10% by weight or more is more preferable, and 15% by weight or more is further preferable. Further, if it is 40% by weight or less, it is easy to obtain a good model object without impairing the appearance of the three-dimensional model object, and 35% by weight or less is more preferable, and 30% by weight or less is further preferable.

In the present invention, inorganic particles can be added in order to further improve the flowability of the resin powder mixture. Although the flowability of the resin powder mixture deteriorates due to interaction with nearby particles when the particle diameter of the resin powder is small, the flowability of the resin powder mixture tends to be able to be improved by adding inorganic particles having a particle diameter smaller than that of the resin powder, thereby enlarging the distance between particles.

The average particle diameter of the inorganic particles in the present invention is preferably 20 nm or more

and 500 nm or less. If the average particle diameter of the inorganic particles is 500 nm or less, they easily disperse uniformly in the resin powder mixture. Further, if the average particle diameter of the inorganic particles is 20 nm or more, a sufficient effect of improving the flowability of the resin powder mixture can be obtained. Here, the average particle diameter is a value measured by a method similar to that for the average particle diameter of the above-described resin powder.

The upper limit of the average particle diameter of the inorganic particles is preferably 400 nm, more preferably 300 nm, particularly preferably 250 nm, significantly preferably 200 nm. The lower limit is preferably 30 nm, more preferably 40 nm, particularly preferably 50 nm.

As inorganic particles in the present invention, exemplified are calcium carbonate particles, silica (silicon dioxide) fine particles, fused silica particles, crystalline silica particles, alumina (aluminum oxide) particles, alumina-containing compound particles, aluminum particles, and the like. Silica fine particles are preferred, and in particular, amorphous silica particles, which are less harmful to the human body, are industrially extremely preferred.

As the shape of the inorganic particles, there are spherical, porous, hollow, and irregular shapes, and the shape of the inorganic particles in the present invention is not particularly limited, but among these shapes, spherical shape is preferred because it exhibits good flowability.

In this case, the spherical shape includes not only true spheres but also distorted spheres. Where, the shape of inorganic particles is evaluated by the degree of circularity when the particles are projected two-dimensionally. Here, the degree of circularity is (peripheral length of a circle having an area equal to the area of the projected particle image)/(peripheral length of the projected particle). The average degree of circularity of the inorganic particles is preferably 0.7 or more and 1.0 or less, more preferably 0.8 or more and 1.0 or less, and further preferably 0.9 or more and 1.0 or less.

The mixing ratio of the inorganic particles in the present invention is preferably 0.1% by weight or more and 0.5% by weight or less, more preferably 0.1% by weight or more and 0.3% by weight or less, and further preferably 0.1% by weight or more and 0.2% by weight or less, taking the resin powder mixture as 100% by weight.

The method for producing the resin powder in the present invention is not particularly restricted, and the particles obtained by polymerization can be used as resin particles, or the particles can be obtained from pellets, fibers, films, etc. made from the resin. Further, milling treatment, which will be described later, can be performed depending on the form of the resin particles to be used. Further, also exemplified are a method of spray drying after dissolving the raw material in a solvent, a poor solvent precipitation method in which an emulsion is formed in a solvent and then contacted with a poor solvent, a drying-in-liquid method in which an emulsion is formed in a solvent and then the organic solvent is removed by drying, and a forcible melt-kneading method in which a resin component to be granulated and a resin component different therefrom are mechanically kneaded to form a sea-island structure, and then the sea component is removed with a solvent. Among them, milling treatment is preferably used from the viewpoint of economy. The method of milling treatment is not particularly restricted, and exemplified are disc milling, jet milling, beads milling, hammer milling, ball milling, sand milling, turbo milling, and cryogenic milling. Dry milling such as turbo milling, jet milling and cryogenic milling is preferred, and cryogenic milling is more preferred.

For the resin powder mixture of the present invention, it is important to uniformly mix resin powder and additives. Although the mixing method is not particularly restricted, a mixing method of rotating the entire vessel in which resin powder, inorganic reinforcing material, inorganic particles, etc. are enclosed is preferred in terms of recovery and operation of the mixture, and it is preferred to mix by enclosing the mixture in a vessel having a plurality of rotation axes including at least a first rotation axis for rotating the vessel and a second rotation axis for rotating the vessel together with the first rotation axis in a direction different from the rotational direction by the first rotation axis, and rotating the plurality of rotation axes simultaneously. Although the angle between the rotation axes in the plurality of rotation axes is not particularly limited, it is preferred that the rotation axes cross each other at a right angle. As the mixer having a plurality of rotation axes, for example, a cross rotary mixer having a plurality of rotation axes and a tumbler mixer having a plurality of rotation axes can be exemplified. The rotational speed of the mixing vessel is preferably 3.5 rpm or more and 35 rpm or less, more preferably 15 rpm or more and 30 rpm or less, regardless of the rotation direction. A longer mixing time is more effective for uniform mixing, and it is preferably 15 minutes or longer, and more preferably 20 minutes or longer. Further, if the mixing time is as short as 7 minutes or less, because the mixed state will be nonuniform even after mixing, the strength of the model object will be reduced.

As the above-described mixer having a plurality of rotation axes, for example, a cross rotary mixer having a plurality of rotation axes as shown in Fig. 1, and a tumbler mixer having a plurality of rotation axes as shown in Fig. 2 can be exemplified. For example, as shown in Fig. 1, a cross rotary mixer having a plurality of rotation axes is a mixer 100 equipped with a first rotation axis 2 for making a vessel 1 enclosed with the resin powder and the additives revolve and a second rotation axis 3 for rotating the vessel 1 together with the first rotation axis 2 in a direction different from the rotational direction by the first rotation axis 2. For example, as shown in Fig. 2, a tumbler mixer having a plurality of rotation axes is a mixer 200 equipped with a first rotation axis 12 for rotating a vessel 11 enclosed with the resin powder and the additives and a second rotation axis 13 for rotating the vessel 11 together with the first rotation axis 12 in a direction different from the rotational direction by the first rotation axis 12. Both the mixers 100 and 200 can be structured

to have three or more rotation axes.

In the present invention, in case where a fibrous inorganic reinforcing material is used, it is preferred to use a vessel in which a rotational blade or stirring blade is mounted. By using these, the problem with agglomeration of the fibers can be solved and more uniform mixing becomes possible. One or more rotating blades or stirring blades are preferably mounted on one vessel. The rotational speed thereof is preferably 100 rpm or more and 1,000 rpm or less, more preferably 400 rpm or more and 700 rpm or less.

In the method for producing a three-dimensional model object of the present invention, it is manufactured by supplying the resin powder mixture described above to a 3D printer. The powder bed fusion method is suitable as a modeling method for the three-dimensional model object of the present invention.

The powder bed fusion method is a 3D printing method wherein a layer of resin powder mixture, which is the raw material, is formed, a portion corresponding to the cross section of a desired model object is melted and welded with a heat source such as a laser, and thereon a layer of resin powder mixture is further formed, and the operation is repeated to obtain a three-dimensional model object.

Where, the resin powder mixture supplied to the powder bed fusion method 3D printer is recovered as appropriate, for example, it is possible to dissolve and precipitate it and making it powder for recycling, or to perform a treatment for removing molten resin other than resin powder with a sieve having an opening of 1 mm, and supply it to the 3D printer again as it is or after mixing it with an unused resin powder mixture.

## Examples

Hereinafter, the present invention will be concretely explained with reference to examples and comparative examples. Where, various determination methods are as follows.

<Raw materials>

·Polyarylene sulfide resin powder ( [A] and [B], etc.)

[Production Example 1]

Into a 1 liter autoclave equipped with a stirrer, 1.00 mol of 47% by weight sodium hydrosulfide, 1.05 mol of 46% by weight sodium hydroxide, 1.65 mol of N-methyl-2-pyrrolidone (NMP), 0.45 mol of sodium acetate and 5.55 mol of ion-exchanged water were charged and gradually heated to 225°C over about 2 hours while nitrogen was passed through at a normal pressure to distill 11.70 mol of water and 0.02 mol of NMP, and then the reaction vessel was cooled to 160°C.

Next, 1.02 mol of p-dichlorobenzene (p-DCB) and 1.32 mol of NMP were added, the reaction vessel was sealed under nitrogen gas, and while stirred at 400 rpm, the temperature of the vessel was elevated at two steps from 160°C to 240°C at a rate of 0.4 °C/min and from 240°C to 270°C at a rate of 0.4 °C/min. After 10 minutes passed from reaching 270°C, 0.75 mol of water was injected into the system over 15 minutes. After 120 minutes at 270°C passed, it was cooled to 200°C at a rate of 1.0 °C/min, and thereafter, rapidly cooled to near a room temperature, and the content was taken out.

After taking the content out and diluting it with 0.5 liter of NMP, the solvent and the solid matter were separated by filtration through a sieve (80 mesh), and after the resulting solid matter was washed several times with 1 liter of warm water, 800g of calcium acetate monohydrate of 0.45% by weight with respect to polyarylene sulfide of the solid matter was added and it was washed, and it was further washed with 1 liter of warm water and separated by filtration to obtain a cake.

The obtained cake was dried at 120°C under a nitrogen stream and then milled, and PPS resin powder (other than polyarylene sulfide resin powder [A] and [B]: [C1]) with a gas generation amount of 0.34 wt%, a melt flow rate of 150 g/10 min, an average particle diameter of 50 μm and a recrystallization temperature of 178°C was obtained.

[Production Example 2]

Using 10 kg of the PPS resin powder obtained in Production Example 1, a three-dimensional model object of 4 mm × 20 mm × 155 mm was produced using a powder bed fusion method type 3D printer (Rafael 300HT, supplied by Aspect Co., Ltd.). The setting conditions were use of 60W $CO_2$ laser, layering height: 0.1 mm, laser scanning interval: 0.1 mm, laser scanning speed: 10 m/s, laser output: 35W, temperature setting: 260°C (under nitrogen atmosphere), and modeling time: 5 hours. After completion of modeling, the resin powder not used for modeling was recovered (polyarylene sulfide resin powder [A]: [A1]). This resin powder had a gas generation amount of 0.11 wt %, a melt flow rate of 45 g/10 min, an average particle diameter of 50 μm, and a recrystallization temperature of 178°C.

[Production Example 3]

The production method of the Production Example 2 was repeated twice. Namely, with respect to the PPS resin powder obtained in Production Example 1, a PPS resin powder having been subjected to a thermal history of 260°C for 10 hours was recovered (polyarylene sulfide resin powder [A]: [A2]). This resin powder had a gas generation amount of 0.02 wt%, a melt flow rate of 28 g/10 min, an average particle diameter of 50 μm, and a recrystallization temperature of 178°C.

[Production Example 4]

Into a 1 liter autoclave equipped with a stirrer, 1.00 mol of 47 wt% sodium hydrosulfide, 1.05 mol of 46 wt% sodium hydroxide, 1.65 mol of NMP, 0.45 mol of sodium acetate, and 5.55 mol of ion-exchanged water were charged and gradually heated to 225°C over about 2 hours while nitrogen was passed through at a normal pressure to distill 11.70 mol of water and 0.02 mol of NMP, and then the reaction vessel was cooled to 160°C.

Next, 1.02 mol of p-DCB and 1.32 mol of NMP were added, the reaction vessel was sealed under nitrogen gas, and while stirred at 400 rpm, the temperature of the vessel was elevated at two steps from 160°C to 240°C at a rate of 0.4 °C/min and from 240°C to 270°C at a rate of 0.4 °C/min. After 10 minutes passed from reaching 270°C, 0.75 mol of water was injected into the system over 15 minutes. After 130 minutes at 270°C passed, it was cooled to 200°C at a rate of 1.0 °C/min, and thereafter, rapidly cooled to near a room temperature, and the content was taken out.

After the content was taken out, it was washed, filtered, dried, and milled in the same manner as Production Example 1 to obtain a PPS resin powder (polyarylene sulfide resin powder [B]) having a gas generation amount of 0.34 wt%, a melt flow rate of 110 g/10 min, an average particle diameter of 50 μm, and a recrystallization temperature of 178°C.

[Production Example 5]

Into a 70 liter autoclave equipped with a stirrer, 70.00 mol of 47.5% sodium hydrosulfide, 69.80 mol of 96% sodium hydroxide, 115.50 mol of NMP, 23.10 mol of sodium acetate, and 583.3 mol of ion-exchanged water were charged and gradually heated to 245°C over about 3 hours while nitrogen was passed through at a normal pressure to distill 821.1 mol of water and 2.82 mol of NMP, and then the reaction vessel was cooled to 200°C.

Next, 71.07 mol of p-DCB and 94.50 mol of NMP were added, the reaction vessel was sealed under nitrogen gas, and the temperature of the vessel was elevated from 200°C to 270°C at a rate of 0.6 °C/min while stirring at 240 rpm. After 100 minutes at 270°C passed, it was rapidly cooled. When the internal temperature reached 100°C, the bottom plug valve of the autoclave was opened, and while pressurizing with nitrogen, the content was flushed into a vessel equipped with a stirrer over 15 minutes, and most of NMP was removed under a reduced-pressure condition (-0.1 MPa) for a while with stirring at 100°C.

The obtained content and 76 liters of ion-exchanged water were placed in an autoclave equipped with a stirrer, and after being washed at 70°C for 30 minutes, they were suction filtered through a glass filter. Then, 76 liters of ion-exchanged water heated to 70°C was poured into the glass filter and suction-filtration was performed to obtain a cake.

The obtained cake and 90 liters of ion-exchanged water were charged into an autoclave equipped with a stirrer, and acetic acid was added so as to adjust the pH to 7. After purging the inside of the autoclave with nitrogen, the temperature was elevated to 180°C and held for 30 minutes. Thereafter, the autoclave was cooled, and the content was taken out.

After the content was suction-filtered through a glass filter, 76 liters of ion-exchanged water at 70°C was poured thereinto and suction-filtration was performed to obtain a cake. The obtained cake was dried at 60°C under a vacuum of -0.1 MPa and milled to obtain a PPS resin powder (polyarylene sulfide Resin powders other than [A] and [B]: [C2]) having a gas generation amount of 0.18 wt%, a melt flow rate of 1,200 g/10 min, an average particle diameter of 50 μm, and a recrystallization temperature of 217°C.

[Production Example 6]

The PPS resin powder obtained in Production Example 1 was spread at a thickness of 5 cm on a metal container, and it was placed in a hot air oven, and heated at 270°C for 2 hours and 30 minutes in the atmosphere to obtain a polyarylene sulfide resin powder (other than [A] and [ B ]: [C3]). This resin powder had a gas generation amount of 0.36 wt %, a melt flow rate of 70 g/10 min, an average particle diameter of 54 μm, and a recrystallization temperature of 178°C.

[Production Example 7]

Into an autoclave equipped with a stirrer, 70.00 mol of 47.5% sodium hydrosulfide, 70.20 mol of 96% sodium

hydroxide, 140.00 mol of NMP, 26.67 mol of sodium acetate, and 583.3 mol of ion-exchanged water were charged and gradually heated to 240°C over about 3 hours while nitrogen was passed through at a normal pressure to distill 819.0 mol of water and 2.82 mol of NMP, and then the reaction vessel was cooled to 160°C.

Next, 70.24 mol of p-DCB and 65.17 mol of NMP were added, the reaction vessel was sealed under nitrogen gas, and the temperature of the vessel was elevated from 200°C to 250°C at a rate of 0.8 °C/min while stirring at 240 rpm, and held at 250°C for 70 minutes. Then, the temperature was elevated from 250°C to 278°C at a rate of 0.8 °C/min and held at 278°C for 78 minutes. The extraction valve at the bottom of the autoclave was opened and the content was flushed into a vessel equipped with a stirrer over 15 minutes while pressurizing with nitrogen, and stirred at 250°C for a while to remove most of the NMP.

The obtained content and 76 liters of ion-exchanged water were placed in an autoclave equipped with a stirrer, washed at 70°C for 30 minutes, and then suction-filtered through a glass filter. Thereafter, 76 liters of ion-exchanged water heated to 70°C was poured into the glass filter and suction-filtration was performed to obtain a cake.

The obtained cake and 90 liters of ion-exchanged water were charged into an autoclave equipped with a stirrer , after the interior of the autoclave was purged with nitrogen, the temperature was elevated to 192°C, and held for 30 minutes. Thereafter, the autoclave was cooled and the content was taken out.

After the content was suction-filtered through a glass filter, 76 liters of ion-exchanged water at 70°C was poured thereinto and suction-filtration was performed to obtain a cake. The obtained cake was dried at 120°C under a nitrogen stream and then milled, and a PPS resin powder (polyarylene sulfide resin powder other than [A] and [B]: [C4]) having a gas generation amount of 0.10 wt %, a melt flow rate of 231 g/10 min, an average particle diameter of 300 μm, and a recrystallization temperature of 220°C was obtained.

[Other components]

As components other than the resin powder to be compounded in the resin powder mixture, carbon fiber uses "PX35" supplied by Zoltek Co., Ltd. was used as carbon fibers, EPG70MD-01N supplied by Nippon Electric Glass Co., Ltd. was used as glass fibers, and X-24-9600 QSG-170 supplied by Shin-Etsu Chemical Co., Ltd. was used as inorganic particles.

[Method of mixing resin powder mixture]

For the mixing method of the resin powder mixture in the present invention, a cross rotary mixer having two rotation axes as shown in Fig. 1 was used. The resin powder, inorganic particles and inorganic reinforcing material were enclosed in a vessel and mixed while being subjected to continuous lateral motion (revolution) and continuous rotational motion (rotation).

<Measurement method>

[Evaluation of gas generation amount of polyarylene sulfide resin powders [A], [B] and [C]]

10g of polyarylene sulfide resin powder was precisely weighed in a vessel and heated in an oven at 320°C for 2 hours. After cooling, the weight was measured and the gas generation amount was determined according to the following equation.

$$(\text{Gas generation amount})=(\text{Weight of resin powder before heating}-\text{Weight of resin powder after heating})/(\text{Weight of resin powder before heating})\times 100\ (\text{wt}\%)$$

[Melt flow rate of polyarylene sulfide resin powders [A], [B] and [C]]

Using polyarylene sulfide resin powder, measurement was performed at 315.5°C under a load of 5 kg according to ASTM-D1238-70.

[Average particle diameter of polyarylene sulfide resin powders [A], [B] and [C]]

The average particle diameter of the polyarylene sulfide resin powder was determined using a laser diffraction/scattering particle size distribution analyzer (supplied by Nikkiso Co., Ltd., MT3300EXII), and using a 0.5% by weight aqueous solution of polyoxyethylene cumylphenyl ether (trade name: Nonal 912A, supplied by TOHO CHEMICAL INDUSTRY Co., Ltd.) as a dispersion medium. Concretely, the total volume of fine particles obtained by analyzing the scattered ray of the laser due to Microtrac method was taken as 100% and the cumulative curve was obtained, and a particle diameter at a point at which the cumulative curve from the small particle diameter side becomes 50% (median diameter: d50) was taken as the average particle diameter of the resin powder.

[Physical properties of three-dimensional model object]

Using 10 kg of resin powder mixture, and using a 3D printer of the powder bed fusion method (Rafael300HT, supplied by Aspect Co., Ltd.), a dumbbell-type test piece (4 mm × 20 mm × 155 mm) with a long side in the XY plane direction was made as a three-dimensional model object. The setting conditions were use of a 60W $CO_2$ laser, layering height of 0.1 mm, laser scanning interval of 0.1 mm, laser scanning speed of 10 m/s, laser output of 35W, and temperature setting of 260°C. The time required for modeling was 5 hours. Using the obtained test piece, the tensile strength was measured with a universal testing machine (Tensilon universal tester RTG-1250, supplied by A&D Co., Ltd.). The measuring method was according to ISO-527-1, and the average value of five measurements was taken as the tensile strength. Further, the state of void generation was visually observed from the fracture surface of the test piece after the tensile test, and when 10 or more voids of 0.3 mm or more were observed, it was evaluated as "×", and the state of less than 10 voids was evaluated as "o".

<Examples 1 to 5, Comparative Examples 1 to 7>

Predetermined amounts of components of resin powder, inorganic particles and inorganic reinforcing material shown in each table were compounded and mixed to obtain each resin powder mixture. Tables 1 and 2 show the components and compounding amounts (the numerals for the resin powder in the tables represent the parts by weight of each component taking the total amount of the resin powder as 100 parts by weight. The numerals for the inorganic particles and inorganic reinforcing material represent the content of each component when the resin powder mixture is 100% by weight).

Next, using the obtained resin powder mixture, a three-dimensional model object was manufactured, and the tensile strength was measured. The evaluation results of each Example and Comparative Example are shown in Tables 1 and 2. However, in Comparative Example 7, a uniform powder surface could not be formed, and the model object could not be evaluated and determined.

[Table 1]

| | | Raw material | | Example 1 | Example 2 | Example 3 | Example 4 | Example 5 |
|---|---|---|---|---|---|---|---|---|
| Resin mixture | Resin powder | Polyarylene sulfide resin powder [A] | [A1] | 100 | | 100 | 70 | 50 |
| | | | [A2] | | 100 | | | |
| | | Polyarylene sulfide resin powder [B] | [B1] | | | | 30 | 50 |
| | | Polyarylene sulfide resin powder (other than [A] and [B]) | [C1] | | | | | |
| | | | [C2] | | | | | |
| | | | [C3] | | | | | |
| | | | [C4] | | | | | |
| | Other components | Inorganic reinforcing material: glass fibers | | | | 25 | 25 | |
| | | Inorganic reinforcing material: carbon fibers | | | | | | 20 |
| | | Inorganic particles: silica particles | | 0.15 | | 0.15 | 0.15 | 0.12 |
| Properties of three-dimensional model object | | Tensile strength (MPa) | | 46 | 48 | 63 | 65 | 79 |
| | | Generation of voids | | ○ | ○ | ○ | ○ | ○ |

[Table 2]

| | | Raw material | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Resin mixture | Resin powder | Polyarylene sulfide resin powder [A] | [A1] | | | | | | | |
| | | | [A2] | | | | | | | |
| | | Polyarylene sulfide resin powder [B] | [B1] | | 100 | | | | | |
| | | Polyarylene sulfide resin powder (other than [A] and [B]) | [C1] | 100 | | 100 | 100 | | | |
| | | | [C2] | | | | | 100 | | |
| | | | [C3] | | | | | | 100 | |
| | | | [C4] | | | | | | | 100 |
| | Other components | Inorganic reinforcing material: glass fibers | | | | 25 | | | | |
| | | Inorganic reinforcing material: carbon fibers | | | | | 20 | | | |
| | | Inorganic particles: silica particles | | 0.15 | 0.15 | 0.15 | 0.12 | | | |
| Properties of three-dimensional model object | | Tensile strength (MPa) | | 43 | 43 | 60 | 75 | 14 | 42 | - |
| | | Generation of voids | | × | × | × | × | ○ | × | - |

In Examples 1 to 5, as compared with Comparative Examples 1 to 6, voids in the model objects were few, and the tensile strengths of the model objects showed high values.

Industrial Applicability

The present invention provides a method for producing a three-dimensional model object with few voids and excellent in tensile strength, further, a resin powder mixture that is suitably used as a material therefor, and a method for producing thereof, and therefore, it can be suitably utilized for a wide range of applications such as automotive, aerospace, industrial, and medical applications.

Explanation of symbols

1, 11: vessel
2, 12: first rotation axis
3, 13: second rotation axis
100, 200: mixer

## Claims

**1.** A resin powder mixture containing a polyarylene sulfide resin powder [A] satisfying the following (a1) to (a3).

(a1) Gas generation amount is 0.25wt% or less.
(a2) Melt flow rate is 5 g/10 min or more and 75 g/10 min or less.
(a3) Average particle diameter is 1 μm or more and 100 μm or less.

**2.** The resin powder mixture according to claim 1, wherein the polyarylene sulfide resin powder [A] is contained at an amount of 20 parts by weight or more and 100 parts by weight or less, taking the total amount of resin powder as 100 parts by weight.

**3.** The resin powder mixture according to claim 1 or 2, containing the polyarylene sulfide resin powder [A] and a polyarylene sulfide resin powder [B] satisfying the following (b1) to (b3).

(b1) Gas generation amount is more than 0.25 wt% and 0.40 wt% or less.
(b2) Melt flow rate is more than 75 g/10 min and 125 g/10 min or less.
(b3) Average particle diameter is 1 μm or more and 100 μm or less.

**4.** The resin powder mixture according to claim 3, wherein the polyarylene sulfide resin powder [B] is contained at an amount of 1 part by weight or more and 50 parts by weight or less, taking the total amount of resin powder as 100 parts by weight.

**5.** The resin powder mixture according to any of claims 1 to 4, containing at least one inorganic reinforcing material selected from carbon fibers, glass fibers and glass beads.

**6.** The resin powder mixture according to claim 5, wherein the inorganic reinforcing is contained at a weight of 5 wt% or more and 40 wt% or less, taking the total weight of resin powder mixture as 100 wt%.

**7.** The resin powder mixture according to claim 5 or 6, wherein the maximum dimension of the inorganic reinforcing material is 1 μm or more and 400 μm or less.

**8.** The resin powder mixture according to any of claims 5 to 7, wherein the inorganic reinforcing material is a carbon fiber having a specific volume resistivity of $20 \times 10^{-4}$ Ω·cm or less.

**9.** The resin powder mixture according to any of claims 1 to 8, containing inorganic particles having an average particle diameter of 20 nm or more and 500 nm or less.

**10.** The resin powder mixture according to claim 9, wherein the inorganic particles are contained at a weight of 0.1 wt% or more and 0.5 wt% or less, taking the total weight of resin powder mixture as 100 wt%.

**11.** The resin powder mixture according to claim 9 or 10, wherein the inorganic particles are spherical silica fine particles.

**12.** A method for producing a resin powder mixture according to any of claims 1 to 11, **characterized in that** the polyarylene sulfide resin powder [A] and other components constituting the resin powder mixture are enclosed in a vessel having a plurality of rotation axes which includes at least a first rotation axis for rotating the vessel and a second rotation axis for rotating the vessel together with the first rotation axis in a direction different from a direction of the rotation by the first rotation axis, and mixed by rotating the plurality of rotation axes simultaneously.

**13.** The method for producing a resin powder mixture according to claim 12, wherein mixing is performed while resolving agglomeration of the components constituting the resin powder mixture by a rotational blade provided in the vessel.

**14.** A method for producing a three-dimensional model object, **characterized in that** the resin powder mixture according to any of claims 1 to 11 is supplied to a 3D printer.

**15.** The method for producing a three-dimensional model object according to claim 14, wherein the 3D printer is a 3D printer for powder bed fusion method.

# FIG. 1

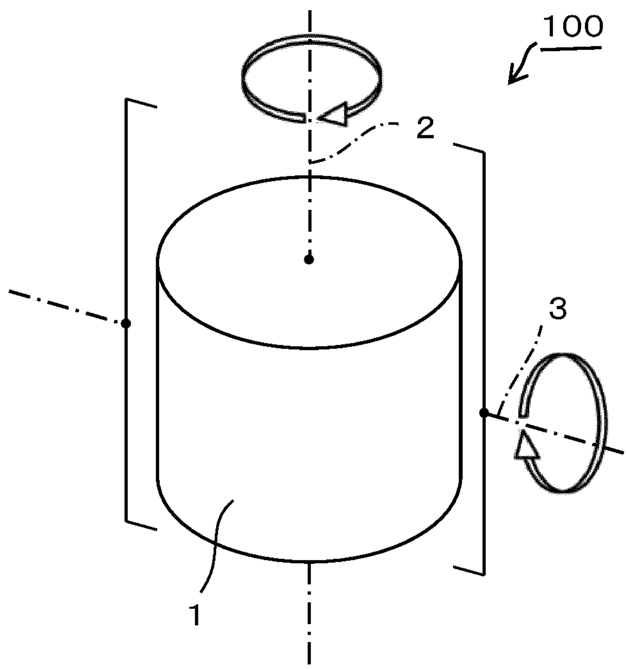


# FIG. 2

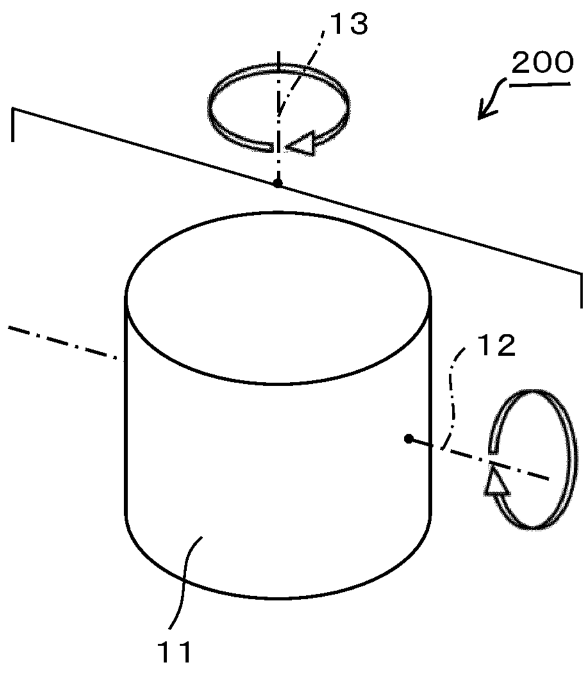

**INTERNATIONAL SEARCH REPORT**

International application No.
**PCT/JP2022/021062**

**A. CLASSIFICATION OF SUBJECT MATTER**

***C08J 3/12***(2006.01)i; ***C08J 3/16***(2006.01)i; ***C08K 7/04***(2006.01)i; ***C08L 81/04***(2006.01)i; ***C08J 5/04***(2006.01)i; ***B33Y 10/00***(2015.01)i; ***B29C 64/153***(2017.01)i; ***B29C 64/314***(2017.01)i; ***B29C 64/321***(2017.01)i; ***C08K 3/36***(2006.01)i; ***B33Y 70/00***(2020.01)i; ***B33Y 70/10***(2020.01)i

FI: C08J3/16 CEZ; C08J3/12 A; C08J5/04; B29C64/153; B29C64/314; B29C64/321; C08L81/04; C08K7/04; C08K3/36; B33Y10/00; B33Y70/00; B33Y70/10

According to International Patent Classification (IPC) or to both national classification and IPC

**B. FIELDS SEARCHED**

Minimum documentation searched (classification system followed by classification symbols)

C08J3/16; B29C64/153; B29C64/314; B29C64/321; B33Y10/00; B33Y70/00; B33Y70/10; C08J3/12; C08J5/04; C08K3/36; C08K7/04; C08L81/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2020/011990 A1 (SOLVAY SPECIALTY POLYMERS USA, LLC) 16 January 2020 (2020-01-16)<br>entire text | 1-15 |
| A | JP 02-107666 A (IDEMITSU PETROCHEM. CO., LTD.) 19 April 1990 (1990-04-19)<br>entire text | 1-15 |
| A | JP 2007-308612 A (TORAY IND., INC.) 29 November 2007 (2007-11-29)<br>entire text | 1-15 |
| A | WO 2006/059209 A1 (TORAY IND., INC.) 08 June 2006 (2006-06-08)<br>entire text | 1-15 |
| A | WO 2018/074353 A1 (TORAY IND., INC.) 26 April 2018 (2018-04-26)<br>entire text | 1-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 June 2022** | **12 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/021062**

**C. DOCUMENTS CONSIDERED TO BE RELEVANT**

| Category* | Citation of document, with indication, where appropriate, of the relevant passages | Relevant to claim No. |
|---|---|---|
| A | WO 2017/126484 A1 (TORAY IND., INC.) 27 July 2017 (2017-07-27) entire text | 1-15 |
| P, A | WO 2021/200332 A1 (TORAY IND., INC.) 07 October 2021 (2021-10-07) entire text | 1-15 |

Form PCT/ISA/210 (second sheet) (January 2015)

**INTERNATIONAL SEARCH REPORT**
**Information on patent family members**

International application No.
**PCT/JP2022/021062**

| Patent document cited in search report | Publication date (day/month/year) | Patent family member(s) | Publication date (day/month/year) |
|---|---|---|---|
| WO 2020/011990 A1 | 16 January 2020 | JP 2021-524399 A<br>entire text<br>US 2021/0292481 A1<br>EP 3820931 A1<br>CN 112424264 A | |
| JP 02-107666 A | 19 April 1990 | (Family: none) | |
| JP 2007-308612 A | 29 November 2007 | (Family: none) | |
| WO 2006/059509 A1 | 08 June 2006 | US 2008/0139782 A1<br>entire text<br>CN 101065419 A | |
| WO 2018/074353 A1 | 26 April 2018 | US 2020/0055234 A1<br>entire text<br>EP 3530701 A1<br>CN 109689788 A | |
| WO 2017/126484 A1 | 27 July 2017 | US 2020/0354528 A1<br>entire text<br>EP 3388471 A1<br>CN 108368275 A<br>KR 10-2018-0103882 A | |
| WO 2021/200332 A1 | 07 October 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6256818 B
- JP 2017043654 A